## Europäisches Patentamt
## European Patent Office
## Office européen des brevets

(19)

(11) Veröffentlichungsnummer: **0 182 238**
**B1**

(12) **EUROPÄISCHE PATENTSCHRIFT**

(45) Veröffentlichungstag der Patentschrift:
12.10.88

(21) Anmeldenummer: 85114306.5

(22) Anmeldetag: 11.11.85

(51) Int. Cl.⁴: **F 16 L 3/08,** F 16 L 33/04, F 16 B 7/08

(54) **Rohrschelle.**

(30) Priorität: 14.11.84 DE 3441562

(43) Veröffentlichungstag der Anmeldung:
28.05.86 Patentblatt 86/22

(45) Bekanntmachung des Hinweises auf die Patenterteilung:
12.10.88 Patentblatt 88/41

(84) Benannte Vertragsstaaten:
AT CH DE FR LI NL

(56) Entgegenhaltungen:
AT-B-136 899
DE-A-3 029 861
DE-A-3 245 092
DE-A-3 346 423
DE-C-2 228 752
DE-U-1 948 999
DE-U-7 833 943
FR-A-2 496 831
GB-A-1 549 773
US-A-1 479 317
US-A-4 310 956

(73) Patentinhaber: Müller, Franz, Eichelhäherstrasse 1,
D-6200 Wiesbaden (DE)

(72) Erfinder: Müller, Franz, Eichelhäherstrasse 1,
D-6200 Wiesbaden (DE)

(74) Vertreter: Jochem, Bernd, Dipl.- Wirtsch.- Ing.,
Patentanwälte Beyer & Jochem Postfach 17 01 45, D-6000 Frankfurt/Main (DE)

## Beschreibung

Die Erfindung betrifft eine Rohrschelle mit einer Öffnung am Umfang zum radialen Einführen eines Rohrs und mit zwei Flanschen, die durch eine Kopfschraube gegeneinander anziehbar sind, welche sich durch ein Durchsteckloch in dem einen Flansch erstreckt und in ein Gewindeloch im anderen Flansch einschraubbar ist.

Im Gegensatz zu leicht biegsamen Spannbändern, bei denen der Winkel, mit dem durch mehrfache Umbiegungen gebildete Flanschen am Band ansetzen, für die Handhabung praktisch keine Rolle spielt (vgl. DE-C-2 228 752), sitzen bei Rohrschellen die Flanschen so steif am Bügel, daß es für eine leichte und schnelle Montage wesentlich darauf ankommt, welche Lage die beiden miteinander zu verbindenen Flanschen zu Beginn des Schließvorgangs relativ zueinander einnehmen.

Bei den bisher bekannten Rohrschellen (DE-U-7 833 943) bilden die Flansche mit dem Bügel im wesentlichen einen rechten Winkel, damit sie sich beim Schließen der Rohrschelle flach gegeneinander anlegen, ohne daß beim Schließvorgang eine Verformung des Winkelbereichs zwischen Flanschen und Bügel stattfinden müßte. Die bekannten Rohrschellen haben allerdings den Nachteil, daß die jeweils im rechten Winkel am Bügel ansetzenden Flanschen solange, wie sie noch nicht flach aneinander anliegen, einen Winkel zueinander bilden, der umso größer ist, je weiter die Rohrschelle geöffnet bzw. gespreizt ist. Es bereitet deshalb bei einteiligen Rohrschellen große Schwierigkeiten, die Schraube, mit der die Rohrschelle geschlossen werden soll, so in das Gewindeloch einzuführen, daß sie zu greifen beginnt, d.h. der Gewindeeingriff zustande kommt. Die Schwierigkeiten resultieren daraus, daß der Monteur gleich zeitig die Rohrschelle, die Schraube und ein Schraubendreher-Werkzeug halten muß, und die Schraube dann, wenn man mit dem Schraubendreher-Werkzeug an ihrem Kopf angreift, damit flach gegen den Flansch mit Durchsteckloch gedrückt wird, so daß der Schraubenschaft eine Lage normal zu diesem Flansch einnimmt und damit schräg zu dem anderen Flansch mit Gewindeloch liegt. Das Problem ist umso größer, je länger die Schraube und je steifer die Rohrschelle ist.

Es sind auch schon Rohrschellen bekannt (US-A-1 479 317), bei denen die durch mehrfache Faltung des für die Schelle verwendeten Bandmaterials gebildeten Flansche im entspannten Zustand der Schelle parallel ausgerichtet sind. Diese Rohrschellen haben jedoch keine Öffnung am Umfang. Sie werden axial auf ein Rohr aufgeschoben. Da in diesem Fall die Schraube schon vorher in das Gewindeloch eingeschraubt werden kann und nach dem Aufschieben der Schelle auf das Rohr nur noch festgezogen zu werden braucht, tritt bei diesen Schellen das genannte Montageproblem nicht auf. Außerdem ist bei ihnen der gegenseitige Abstand der Flanschen kleiner als die Schaftlänge der Spannschraube, so daß eine Führung der Schraube am Kopf in der Phase, wo diese auf das Gewindeloch ausgerichtet werden muß, nicht möglich ist.

Entsprechendes gilt für eine andere bekannte Rohrschelle ohne Öffnung am Umfang (DE-U-1 948 999), bei welcher die Flansche auf den Außenseiten mit Auswölbungen geformt, aber ebenfalls nicht für eine definierte Ausrichtung der Schraube auf das Gewindeloch im Moment des Eingriffs vorgesehen sind.

Bei weiteren bekannten Rohrschellen (US-A-3 038 230, US-A-1 482 564, AT-A-136 899) tritt das erwähnte Montageproblem ebenfalls nicht auf, weil dort die Schrauben nicht in ein Gewindeloch im Flansch, sondern in eine Mutter eingreifen.

Der Erfindung liegt die Aufgabe zugrunde, eine Rohrschelle der eingangs genannten Art zu schaffen, welche sich leichter und schneller montieren läßt.

Vorstehende Aufgabe wird erfindungsgemäß dadurch gelöst, daß die Flansche mit solchen Winkeln am entspannten Rohrschellenbügel ansetzen und/oder so geformt sind, daß in derjenigen Stellung, in welcher die Schraube im Gewindeloch zu greifen beginnt, eine oder mehrere Führungsflächen für den Schraubenkopf am Flansch mit dem Durchsteckloch die Schrauben auf das Gewindeloch ausrichten.

Durch die Erfindung wird erreicht, daß die beiden zu verbindenden Flanschen bereits in derjenigen Offenstellung der Rohrschelle, in welcher die Schraube angesetzt wird, insgesamt oder wenigstens mit einer Führungsfläche für den Schraubenkopf parallel zueinander ausgerichtet sind, so daß die durch das Werkzeug mit dem Schraubenkopf gegen den einen Flansch angedrückte Schraube gleich zu Beginn des Schraubenvorgangs mit Bezug auf das Gewindeloch richtig positioniert ist.

Der Winkel, den bei der erfindungsgemäßen Rohrschelle die Flanschen bzw. eine Führungsfläche am Flansch für den Schraubenkopf mit einem zum Ansatzpunkt des jeweiligen Flanschs gezogenen Radius bilden, läßt sich aus nachstehender Formel berechnen:

$$\operatorname{tg} \alpha = \frac{1/2 \cdot L}{R}$$

worin L die Länge des Schraubenschafts und R der Radius der Rohrschelle sind.

In einer bevorzugten praktischen Ausführungsform der Erfindung erstrecken sich die Flansche in derjenigen Stellung, in welcher die Schraube im Gewindeloch zu greifen beginnt, im wesentlichen radial, und die Führungsflächen für den Schraubenkopf sind durch eine das Durchsteckloch umgebende Auswölbung und eine weitere Anlagefläche am Flansch gebildet. Das Durchsteckloch ist in diesem Fall vorzugsweise ein sich radial erstreckendes Langloch, an dessen einem Ende die Schraube anliegt, während sie durch die Führungsflächen auf das Gewindeloch ausgerichtet wird. Die Auswölbung hat eine solche Form, daß sie dem Schraubenkopf nicht nur zu Beginn des Einschraubens, sondern auch während des fortschreitenden Schraubvorgangs bei ständiger Änderung der relativen Winkelstellung der beiden Flansche eine Anlagefläche bietet, wobei sich der Schraubenkopf längs der Wölbung verschiebt. Infolge dieser Gleitbewegung des Schraubenkopfs auf der Wölbung während des Festziehens der Schraube bedarf es keiner Verformung des Materials im Ansatzbereich zwischen Flansch und Rohrschellenbügel.

Bringt man hingegen die Flansche mit einem solchen Winkel am Rohrschellenbügel an, daß sie schon im Abstand der Schraubenschaftlänge eine parallele Lage einnehmen, treffen sie beim zunehmenden Festziehen der Schraube nicht flach, sondern unter einem spitzen Winkel zuerst im Bereich ihrer äußeren Enden gegeneinander. Bei nicht zu steifen Rohrschellen findet unter der Einwirkung der Schraubkraft von allein eine entsprechende Verformung im Ansatzbereich der Flanschen am Rohrschellenbügel statt, die dazu führt, daß am Ende die Flanschen flach aneinder anliegen. Bei dickeren bzw. steiferen Rohrschellen wird in bevorzugter Ausgestaltung der Erfindung zur Erleichterung dieser letztgenannten Verformung im Rohrschellenbügel neben wenigstens einem der Flansche eine durch Materialschwächung gebildete Sollbiegestelle angebracht. Dies kann konkret z. B. dadurch geschehen, daß der Rohrschellenbügel neben den Flanschen mit Löchern oder Ausnehmungen versehen wird, die vorzugsweise neben der Mittelachse liegen.

Bei einer weiteren praktischen Ausführungsform der Erfindung erstrecken sich die Flansche in derjenigen Stellung, in welcher die Schraube im Gewindeloch zu greifen beginnt, im wesentlichen radial, und in eine gegenseitig parallele Lage zurückgebogene Enden der Flanschen bilden einerseits eine Anlage- und Führungsfläche für den Schraubenkopf und enthalten andererseits ein Gewindeloch. In diesem Fall kann der Schraubenschaft durch Löcher in den Mittelteilen der Flanschen hindurchgesteckt werden, es kann aber auch das Mittelteil desjenigen Flanschs, dessen umgebogenes Ende das Gewindeloch trägt, selbst mit einem Gewindeloch versehen sein.

Die Montage der Rohrschelle kann noch weiter erleichtert und beschleunigt werden, indem in bevorzugter Ausgestaltung der Erfindung die Umgebung des Gewindelochs auf der Innenseite des Flanschs trichterförmig eingewölbt ist. Durch den Trichter wird das freie Ende der Schraube zum Gewindeloch hin gelenkt. Der Führungstrichter hat den weiteren Vorteil, daß er die Aufreißfestigkeit der Rohrschelle erhöht, denn im Belastungsfall wird die Schraube gegen den Trichter gezogen, und eine beginnende Deformation des Trichters bewirkt die Verengung des Muttergewindes und damit eine Erhöhung der Festigkeit.

Eine weitere Erhöhung der Festigkeit kann dadurch erreicht werden, daß die Materialstärke der Schelle größer als die Gewindesteigung der Schraube gewählt und im Gewindebereich auf eine geringere Dicke zusammengepreßt wird, so daß das Material im verdichteten Bereich eine größere Festigkeit erhält. Der Gewindegang des Gewindelochs wird im Interesse einer einfachen und kosten günstigen Herstellung der Rohrschelle vorzugsweise im Zusammenhang mit den anderen Stanz- und Biegevorgängen bei der Fertigung der Rohrschelle durch Pressen geformt.

Die Schraube zum Schließen der Rohrschelle ist vorzugsweise eine Blechtreibschraube, da diese ein verhältnismäßig grobes Gewinde hat, welches auch beim Eindrehen der Schraube mittels eines elektrischen Schraubers schnell und sicher das Muttergewinde findet und greift. Um die Mutter vor der Montage unverlierbar im Durchsteckloch des einen Flanschs zu halten, sitzt auf ihr vorzugsweise reibschlüssig eine Sicherungsscheibe.

Die Erfindung wird nachstehend anhand von in der Zeichnung dargestellten Ausführungsbeispielen näher erläutert. Es zeigen:

Fig. 1 eine Seitenansicht einer erfindungsgemäßen Rohrschelle;
Fig. 2 eine Draufsicht auf die Rohrschelle nach Fig. 1;
Fig. 3 und 4 Querschnitte nach Schnittlinien III-III bzw. IV-IV in Fig 2;
Fig. 5 eine Seitenansicht einer abgewandelten Ausführungsform der erfidungsgemäßen Rohrschelle;
Fig. 6 eine Teildraufsicht auf die Rohrschelle nach Fig. 5;
Fig. 7 einen Teilquerschnitt durch die Rohrschelle nach Fig. 5 und 6;
Fig. 8 nochmals ein weiteres Ausführungsbeispiel der Erfindung.

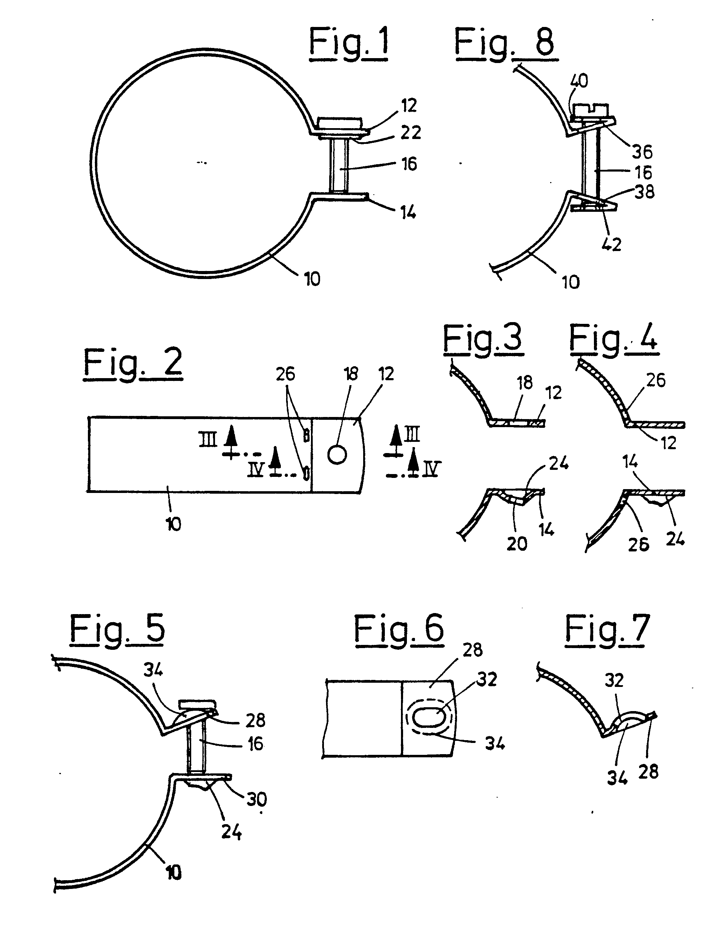

Die in Fig. 1 gezeigte einteilige Rohrschelle besteht aus einem Rohrschellenbügel 10 mit Flanschen 12 und 14 an den Enden. Einzelheiten der Flansche sind aus den Figuren 2 bis 4 zu ersehen. Die Rohrschelle wird mittels einer Schraube 16 geschlossen, die sich durch ein Durchsteckloch 18 (Fig. 2 und 3) im Flansch 12 erstreckt und in ein Gewindeloch 20 im Flansch 14 einschraubbar ist. Damit die Schraube 16 vor dem Schließen der Rohrschelle nicht verlorengeht, kann eine Sicherungsscheibe 22, z. B. aus Kunststoff aufgesetzt sein. Es besteht die Möglichkeit, in den Rohrschellenbügel 10 eine Einlage zur Schallisolierung einzulegen und/oder eine nicht gezeigte Mutter oder ein anderes Befestigungselement am Bügel anzubringen, mittels welcher die Rohrschelle an einem Gewindebolzen oder einem anderen Tragorgan befestigt werden kann.

Die Besonderheit der Rohrschelle nach Fig. 1 bis 4 besteht darin, daß die Flansche 12 und 14 nicht radial vom Rohrschellenbügel 10 abgewinkelt sind, sondern in einem solchen, im Beispielsfall gleichmäßigen Winkel, daß sie gerade in derjenigen Öffnungsstellung der Rohrschelle, in welcher die Schraube 16 mit ihrem Kopf am Flansch 12 anliegt und im Gewindeloch im Flansch 14 zu greifen beginnt, parallel liegen, wie dies in Fig. 1 dargestellt ist.

Damit die Schraube 16 schnell und sicher in Eingriff mit dem Gewindeloch 20 kommt, ist dieses gemäß Fig. 3 ringsum von einer trichterförmigen Einwölbung 24 umgeben. Es handelt sich bei der Schraube 16 außerdem um eine Blechtreibschraube mit verhältnismäßig grobem Gewinde. Der Gewindegang im Gewindeloch 20 ist gepreßt.

Wenn die Rohrschelle mittels der Schraube 16 zunehmend geschlossen wird, kommen die Flansche 12 und 14 aus ihrer parallelen Lage und berühren einander schließlich an den freien Enden zuerst. Beim weiteren Festziehen der Schraube 16 im Gewindeloch 20 findet eine gewisse Verformung an den Flanschen 12, 14 und/oder am Schellenbügel statt. Im Beispielsfall sind jeweils neben den Flanschen am Schellenbügel 10 Sollbiegestellen angebracht, indem jeweils außermittig, wie in Fig. 2 gezeigt, zwei Löcher 26 im Rohrschellenbügel 10 vorhanden sind.

Bei der Ausführungsform nach Fig. 5 bis 7 setzen die dort mit 28 und 30 bezeichneten Flansche in üblicher Weise im wesentlichen radial am Schellenbügel 10 an. Damit gleichwohl die Schraube 16 zu Beginn des Einschraubvorgangs zuverlässig das Gewindeloch im Flansch 30 findet und zu greifen beginnt, ist einerseits wiederum eine trichterförmige Einwölbung 24 um das Gewindeloch herum vorgesehen, andererseits im Flansch 28 ein Langloch 32 angebracht, welches von einer Auswölbung 34 umgeben ist. Diese Auswölbung hat eine solche Kontur, daß sie dem Kopf der Schraube 16 in der Stellung der Rohrschelle nach Fig. 5, in welcher die Schraube 16 zu greifen beginnt, eine quer zur Achsrichtung des Gewindelochs im Flansch 30 liegende Abstützung bietet, wobei der Schraubenkopf, während er am äußeren Ende des Langlochs 32 anliegt, wie in Fig. 5 gezeigt, neben der Auswölbung 34 auch noch auf einer weiteren Führungsfläche am freien Ende des Flanschs 28 anliegt. Diese Führungsflächen ergeben insgesamt die gewünschte Ausrichtung der Schraube 16 auf das Gewindeloch 20. Beim Festziehen der Schraube 16 verlagert sich dann der Schraubenschaft im Langloch 32 und der Schraubenkopf längs der Auswölbung 34. Die Schraube 16 ist vorzugsweise eine Kreuzschlitz- oder Innensechskantschraube, an der ein Motorschrauber angesetzt werden kann.

Nochmals ein weiteres Ausführungsbeispiel ist in Fig. 8 dargestellt. Auch dort erstrecken sich die Mittelteile 36 bzw. 38 der Flansche im wesentlichen radial. Um die Schraube 16 in der in Fig. 8 gezeigten Öffnungsstellung, bei welcher die Schraube zu greifen beginnt, auf das Gewindeloch auf seiten des Flanschs 38 auszurichten, sind bei diesem Ausführungsbeispiel die freien Enden 40 bzw. 42 der Flanschen 36 und 38 so weit nach außen umgebogen, daß sie parallel liegen. Im umgewinkelten Ende 40 des Flanschs 36 befindet sich ein Durchsteckloch für die Schraube 16, im umgebogenen Ende 42 des Flanschs 38 ein passendes Gewindeloch, und in den Mittelteilen 36 und 38 der Flanschen sind jeweils Langlöcher vorgesehen, durch die sich die Schraube erstreckt.

Ergänzend zu den vorstehend beschriebenen Ausführungsbeispielen sei angemerkt, daß auch bei einer Rohrschelle nach Art der Fig. 1 der Flansch 14 ähnlich wie der Flansch 38, 42 der Ausführung nach Fig. 8 umgebogen sein und in beiden Schenkeln dieses Flanschs mit einem koaxialen Gewindeloch versehen sein könnte. Auf diese Weise kann eine höhere Tragfähigkeit des Gewindes im Flansch erhalten werden.

Im übrigen ist die Erfindung nicht auf die dargestellten Ausführungsbeispiele beschränkt, sondern umfaßt alle Ausführungen von Rohrschellen, bei denen zwei miteinander durch eine Schraube zu verbindende Flansche derart ausgerichtet und/oder mit einer besonderen Stützfläche für den Schraubenkopf versehen sind, daß die Schraube gerade in der kritischen Phase, wo sie in das Gewindeloch eingreifen soll, bei axialem Druck gegen den Schraubenkopf richtig positioniert wird. Erwähnt seien in diesem Zusammenhang vor allem zweiteilige Rohrschellen, bei denen sich am Umfang gegenüber der durch die Schraube zu schließenden Öffnung ein Gelenk oder eine Verbindungsstelle befindet.

Die Form der trichterförmigen Einwölbung auf Seiten des Gewindelochs hängt u.a. von der Art des Muttergewindes ab. Wenn dieses geprägt wird und nur etwa einen Gewindegang hat, ergibt sich die aus der Zeichnung ersichtliche unsymmetrische Form. Bei geschnittenen mehrgängigen Gewinden könnten symmetrische konische oder kalottenförmige oder ähnliche Einsenkungen vorgesehen werden.

**Patentansprüche**

1. Rohrschelle mit einer Öffnung am Umfang zum radialen Einführen eines Rohrs und mit zwei Flanschen (12, 14; 28, 30; 36, 38) die durch eine Kopfschraube (16) gegeneinander anziehbar sind, welche sich durch ein Durchsteckloch (18) in dem eine Flanch (12, 28, 36) erstreckt und in ein Gewindeloch (20) im anderen Flansch (14, 30, 38) einschraubbar ist, dadurch gekennzeichnet, daß die Flansche (12, 14; 28, 30; 36, 38) mit solchen Winkeln am entspannten Rohrschellenbügel (10) ansetzen und/oder so geformt sind, daß in derjenigen Stellung, in welcher die Schraube (16) im Gewindeloch (20) zu greifen beginnt, eine oder mehrere Führungsflächen (12; 28; 34; 40) für den Schraubenkopf am Flansch (12, 28, 36) mit dem Durchsteckloch (18) die Schraube (16) auf das Gewindeloch (20) ausrichten.

2. Rohrschelle nach Anspruch 1, *dadurch gekennzeichnet*, daß sich in derjenigen Stellung der Flansche (12, 14; 28, 30; 36, 38), in welcher die Schraube (16) im Gewindeloch (20) zu greifen beginnt, die Führungsflächen (12; 28, 34; 40) quer zur Längsachse des Gewindelochs (20) erstrecken.

3. Rohrschelle nach Anspruch 1 oder 2, *dadurch gekennzeichnet*, daß sich die Flansche (28, 30) in derjenigen Stellung, in welcher die Schraube (16) im Gewindeloch (20) zu greifen beginnt, im wesentlichen radial erstrecken, und die Führungsflächen (28, 34) für den Schraubenkopf durch eine das Durchsteckloch (32) umgebende Auswölbung (34) und eine weitere Anlagefläche am Flansch (28) gebildet sind.

4. Rohrschelle nach Anspruch 1 oder 2, *dadurch gekennzeichnet*, daß sich die Flansche (36, 38) in derjenigen Stellung, in welcher die Schraube (16) im Gewindeloch (20) zu greifen beginnt, radial erstrecken und in eine gegenseitig parallele Lage zurückgebogene Enden (40, 42) der Flansche (36, 38) einerseits eine Führungsfläche für den Schraubenkopf bilden und andererseits ein Gewindeloch enthalten.

5. Rohrschelle nach Anspruch 1, *gekennzeichnet durch* eine durch Materialschwächung (26) gebildete Sollbiegestelle im Rohrschellenbügel (10) neben wenigstens einem der Flansche (12, 14).

6. Rohrschelle nach einem der Ansprüche 1 bis 5, *dadurch gekennzeichnet*, daß der Gewindegang des Gewindelochs (20) gepreßt ist.

7. Rohrschelle nach einem der Ansprüche 1 bis 6, *dadurch gekennzeichnet*, daß die Umgebung des Gewindelochs (20) auf der Innenseite des Flanschs (14) trichterförmig eingewölbt ist.

8. Rohrschelle nach einem der vorhergehenden Ansprüche, *dadurch gekennzeichnet*, daß das Durchsteckloch (32) ein Langloch ist.

9. Rohrschelle nach einem der vorhergehenden Ansprüche, *dadurch gekennzeichnet*, daß die Schraube (16) eine Blechtreibschraube ist.

10. Rohrschelle nach einem der vorhergehenden Ansprüche, *dadurch gekennzeichnet*, daß die Schraube (16) durch eine reibschlüssig anliegende Sicherungsscheibe (22) unverlierbar im Durchsteckloch (18) gehalten ist.

## Claims

1. Pipe clamp with an aperture at its periphery for the radial introduction of a pipe, and with two flanges (12, 14; 28, 30; 36, 38) which are adapted to be drawn towards one another by a head screw (16), the latter extending through a push-through hole (18) in the one flange (12, 28, 36) and being screwable into a screwthreaded hole (20) in the other flange (14, 30, 38), characterized in that the flanges (12, 14; 28, 30; 36, 38) join the pipe clamp loop (10) in the non-tensioned state of the latter at such angles, and/or are so shaped, that in the position wherein the screw (16) begins to grip in the screwthreaded hole (20) one or more guide surfaces (12; 28, 34; 40) for the screw head at the flange (12, 28, 36) provided with the push-through hole (18) align the screw (16) on the screwthreaded hole (20).

2. Pipe clamp according to claim 1, characterised in that in the position of the flanges (12, 14; 28, 30; 36, 38) wherein the screw (16) begins to grip in the screwthreaded hole (20) the guide surfaces (12; 28, 34; 40) extend transversely with respect to the longitudinal axis of the screwthreaded hole (20).

3. Pipe clamp according to claim 1 or 2, characterised in that the flanges (28, 30) in the position wherein the screw (16) begins to grip in the screwthreaded hole (20) extend substantially radially, and the guide surfaces (28, 34) for the screw head are formed by a bulge (34) surrounding the push-through hole (32) and by a further abutment surface on the flange (28).

4. Pipe clamp according to claim 1 or 2, characterised in that in the position in which the screw (16) begins to grip in the screwthreaded hole (20) the flanges (36, 38) extend radially, and ends (40, 42) of the flanges (36, 38) are bent back into a position in which they are parallel to one another, and the said ends form a guide surface for the screw head on the one hand and comprise a screwthreaded hole on the other hand.

5. Pipe clamp according to claim 1, characterised by a predetermined bending zone, formed by material weakening (26), in the pipe clamp loop (10) adjacent to at least one of the flanges (12, 14).

6. Pipe clamp according to one of claims 1 to 5, characterised in that the thread of the screwthreaded hole (20) is produced by pressing.

7. Pipe clamp according to one of claims 1 to 6, characterised in that the region surrounding the screwthreaded hole (20) at the inner side of the flange (14) is recessed in funnel-shaped manner.

8. Pipe clamp according to one of the preceding claims, characterised in that the push-through hole (32) is a slot.

9. Pipe clamp according to one of the preceding claims, characterised in that the screw (16) is a self-tapping screw.

10. Pipe clamp according to one of the preceding claims, characterised in that the screw (16) is held non-losably in the push-through hole (18) by means of a retaining washer (22) which abuts in frictionally locking manner.

## Revendications

1. Bride pour tuyau, comprenant une interruption périphérique pour l'introduction transversale d'un tuyau, alors que deux flasques (12, 14; 28, 30; 36, 38) sont situés de part et d'autre de cette interruption, alors qu'une vis à tête (16) est prévue pour les rapprocher l'un de l'autre au serrage, ladite vis traversant librement un trou d'introduction (18) dans l'un des flasques (12, 28, 36), alors qu'elle vient se visser dans un trou taraudé (20) de l'autre flasque (14, 30, 38), caractérisée en ce que lesflasques (12, 14; 28, 30; 36, 38) sont situés et/ou formés sur le côté de la bride (10) au repos, avec un angle tel que, dans la position où la vis (16) commence à attaquer le trou taraudé (20) une ou plusieurs surfaces de guidage (12; 28, 34; 40) agissant sur la tête de vis contre le flasque (12, 28, 36), de façon à diriger la tige filetée de la vis (16) depuis le trou d'introduction (18), jusqu'en direction du trou taraudé (20).

2. Bride pour tuyau suivant la revendication 1 caractérisée en ce que dans la position des flasques (12, 14; 28, 30; 36, 38) pour laquelle la vis (16) commence à attaquer le trou taraudé (20), les faces de guidage (12; 28, 34; 40) sont orientées transversalement, par rapport à l'axe longitudinal du trou taraudé (20).

3. Bride pour tuyau suivant l'une quelconque des revendications 1 et 2, caractérisée en ce que lorsque les flasques (28) et (30) se trouvent à la position pour laquelle la vis (16) commence à attaquer le trou taraudé (20), ces flasques (28) et (30) s'étendent dans une direction sensiblement radiale, tandis que les surfaces de guidage (28, 34) pour la tête de vis, sont constituées par un embout convexe autour du trou d'introduction (32), et par une autre face d'appui du flasque (28).

4. Bride pour tuyau suivant l'une quelconque des revendications 1 et 2, caractérisée en ce que dans la position où la vis (16) attaque le trou taraudé (20), les flasques (36, 38) ont une orientation sensiblement radiale, alors que deux languettes d'extrémités (40, 42) rabattues de part et d'autre des flasques (36) et (38) constituent, l'une une face de guidage pour la tête de vis, l'autre, le trou taraudé lui-même.

5. Bride pour tuyau suivant la revendication 1, carectérisée en ce qu'elle comporte, près d'au moins l'un des flasques (12, 14), une zone d'affaiblissement (26), définissant une ligne préférentielle de pliage de la bride (10).

6. Bride pour tuyau suivant l'une quelconque des revendications 1 à 5, caractérisée en ce que le filetage du trou taraudé (20) est formé à la presse.

7. Bride pour tuyau suivant l'une quelcon que des revendications 1 à 6, caractérisée en ce que la périphérie du trou taraudé (20) est incurvée en forme d'enton noir, sur la face interne du flasque (14).

8. Bride pour tuyau suivant l'une quelconque des revendications précédentes, caractérisée en ce que le trou d'introduction (32) a une section transversale allongée.

9. Bride pour tuyau suivant l'une quelconque des revendications précédentes, caractérisée en ce que la vis (16) est une vis auto-taraudante dans la tôle.

10. Bride pour tuyau suivant l'une quelconque des revendications précédentes, caractérisée en ce que la vis (16) engagée dans le trou d'introduction (18) est imperdable, retenue en place par une rondelle de sécurité à friction (22).

Fig. 1

Fig. 8

Fig. 2

Fig. 3

Fig. 4

Fig. 5

Fig. 6

Fig. 7